# EUROPEAN PATENT APPLICATION

(11) **EP 4 141 821 A1**
(43) Date of publication of application: **01.03.2023**
(21) Application number: 22188626.0
(22) Date of filing: 03.08.2022
(51) Int. Cl.: G07B 15/02, G06Q 30/0238, G06Q 20/32

(54) **PARKING INFORMATION SERVICE SYSTEM**

(30) Priority: 24.08.2021 JP 2021136508
(71) Applicant: Suzuki Motor Corporation, Hamamatsu-shi, Shizuoka 432-8611 (JP)
(72) Inventor: NAKANISHI, Tetsuhiro, HAMAMATSU-SHI, 432-8611 (JP)
(74) Representative: Plasseraud IP

(57) **Abstract**

[Problems to be Solved] To provide a user of a parking lot with information about a usage status of the parking lot at an appropriate timing.

[Solution] A parking information service system includes: a receiving unit receiving information about a parking start time of a vehicle in a predetermined area; a calculation unit calculating a parking fee of the vehicle; and a transmitting unit transmitting information about the parking fee to a terminal of a user of the vehicle, in which the information about the parking fee is displayed (S132) on a display unit of the terminal at a first timing (S131).

## Description

### [Technical Field]

The present invention relates to a parking information service system.

### [Background Art]

Patent Literature 1 discloses a system that performs management and settlement of a service fee of a parking area on a mobile terminal, the system including: an ID storage means that is provided in the parking area, and stores an ID for identifying the parking area so that the ID can be acquired by the mobile terminal; a recording means that receives a request from the mobile terminal and records a parking start and or a parking end in the parking area; a request means that is provided to the mobile terminal, and transmits a request about the parking area related to the ID to the recording means by using the ID acquisition as a trigger; a charge table stored in association with the ID; and a settlement means that is provided to the mobile terminal, and settles the service fee with reference to the charge table and the record.

### [Citation List]

### [Patent Literature]

[Patent Literature 1] JP 2019-071042 A

### [Summary of Invention]

### [Problems to be Solved by the Invention]

It has been desired for a user of a parking lot to be able check information about usage status of a parking lot at an appropriate timing.

An object of the present invention is to provide a user of a parking lot with information about usage status of the parking lot at an appropriate timing.

### [Means for Solving the Problems]

In order to achieve the above object, a parking information service system according to the present invention, includes: a receiving unit for receiving information about a parking start time of a vehicle in a predetermined area; a calculation unit calculating a parking fee of the vehicle; and a transmitting unit transmitting information about the parking fee to a terminal of a user of the vehicle. The information about the parking fee is displayed on a display unit of the terminal at a first timing.

### [Advantageous Effects of Invention]

According to the present invention, it is possible to provide a user of a parking lot with information about usage status of the parking lot at an appropriate timing.

### [Brief Description of Drawings]

[Figure 1] Figure 1 is an explanatory drawing showing a parking information service system.
[Figure 2] Figure 2 is a block diagram showing a configuration of a road-shoulder communication device.
[Figure 3] Figure 3 is a block diagram showing a configuration of an on-board device.
[Figure 4] Figure 4 is a block diagram showing a configuration of a mobile terminal.
[Figure 5] Figure 5 is a block diagram showing a configuration of a management function server.
[Figure 6] Figure 6 is a block diagram showing a configuration of a POS terminal.
[Figure 7] Figure 7 is a flowchart showing a flow of a first processing performed in the parking information service system.
[Figure 8] Figure 8 is a flowchart showing a flow of a second processing performed in the parking information service system.
[Figure 9] Figure 9 is a flowchart showing a flow of a third processing performed in the parking information service system.
[Figure 10] Figure 10 is a flowchart showing a flow of a fourth processing performed in the parking information service system.

### [Modes for Carrying Out the Invention]

Hereinafter, the present invention will be described based on the illustrated embodiments. However, the present invention is not limited by the embodiments described below.

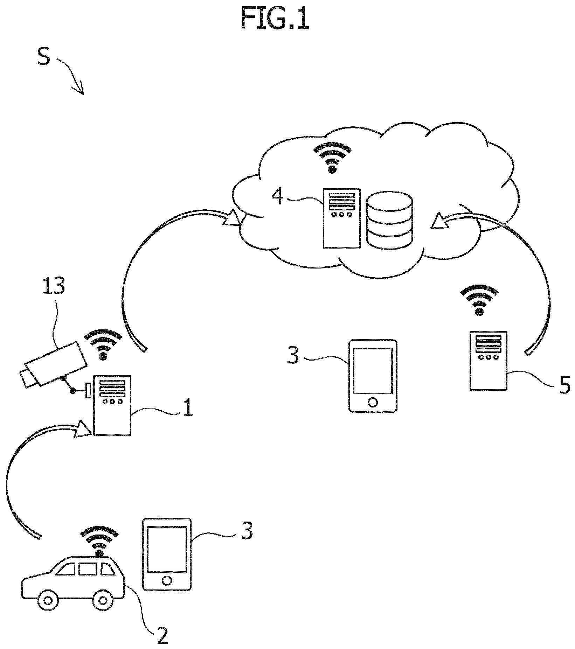

Figure 1 shows a parking information service system S. The parking information service system S includes: a road-shoulder communication device 1 provided in a parking lot of a certain facility (a shopping mall, etc.); a vehicle 2 that uses the parking lot, and a mobile terminal 3 of an occupant of the vehicle 2. The parking information service system S further includes: a management function server 4 of the facility and a POS terminal 5 of a shop located in the facility.

The road-shoulder communication device 1 and the management function server 4 are connected by a communication network so as to be able to communicate with each other. Furthermore, the management function server 4 and the POS terminal 5 are connected by the communication network so as to be able to communicate with each other. An on-board device disposed in the vehicle 2 is configured to be able to communicate with the road-shoulder communication device 1. The mobile terminal 3 is configured to be able to communicate with at least one of the road-shoulder communication device 1, the on-board device in the vehicle 2, and the POS terminal 5 in accordance with a current position of the mobile terminal 3.

If the management function server 4 is in an external cloud or the like, a cellular SIM card may be inserted into the road-shoulder communication device 1 to communicate directly with the management function server 4, or the road-shoulder communication device 1 may connect to a LAN or the like of the shop by wire or wirelessly to communicate with the management function server 4 via the Internet connection of the shop.

If the management function server 4 is in the network in the shop, the road-shoulder communication device 1 can communicate with the management function server 4 by connecting to the LAN or the like in the shop by wire or wirelessly.

If the management function server 4 is in an external cloud or the like, the cellular SIM card may be inserted into the POS terminal 5 to communicate directly with the management function server 4; or the POS terminal 5 may connect to the LAN or the like of the shop by wire or wirelessly so as to communicate with the management function server 4 via the Internet connection of the shop.

If the management function server 4 is in the network in the shop, the POS terminal 5 can communicate with the management function server 4 by connecting to the LAN or the like in the shop by wire or wirelessly.

The on-board device disposed in the vehicle 2 can communicate with the road-shoulder communication device 1 via wireless standards provided as standard. As an example of the wireless standards, the wireless Wi-Fi standards used for inter-vehicle communication and road-vehicle communication, such as 802.11p, can be considered. Another Wi-Fi or Bluetooth may be used as long as this can be used outdoors.

When the mobile terminal 3 communicates directly with the road-shoulder communication device 1 not via the on-board device, the mobile terminal 3 can communicate with the road-shoulder communication device 1 via communication standards provided as standard to the mobile terminal 3. Alternatively, this connection may be established by Wi-Fi or Bluetooth.

The on-board device and the mobile terminal 3 can communicate with each other via the communication standards provided as standard to the mobile terminal. Alternatively, this connection may be established by Wi-Fi or Bluetooth.

The mobile terminal 3 and the POS terminal 5 can communicate with each other by causing the POS terminal 5 to read a QR code or the like displayed on a screen of the mobile terminal 3.

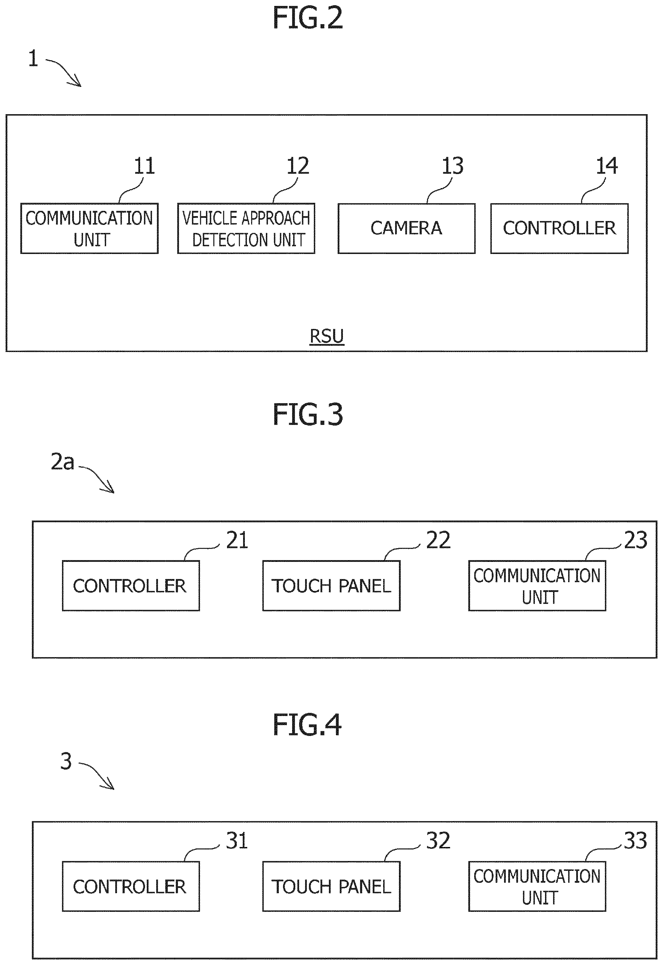

As shown in Figure 2, the road-shoulder communication device 1 includes: a communication unit 11 that communicates with the on-board device, the mobile terminal 3, and the management function server 4 in the vehicle 2; a vehicle approach detection unit 12 that detects approaching of the vehicle to a parking lot; a camera 13; and a controller 14. The road-shoulder communication device is also referred to an RSU (roadside unit).

As shown in Figure 3, the on-board device 2a in the vehicle 2 includes; a controller 21; a touch panel 22 that displays information for an occupant and accepts input by the occupant; and a communication unit 23 that communicates with the road-shoulder communication device 1 and the mobile terminal 3.

As shown in Figure 4, the mobile terminal 3 includes: a controller 31; a touch panel 32 that displays information for a user of the mobile terminal 3 and accepts input by the user; and a communication unit 33 that communicates with the road-shoulder communication device 1, the on-board device 2a, and the POS terminal 5.

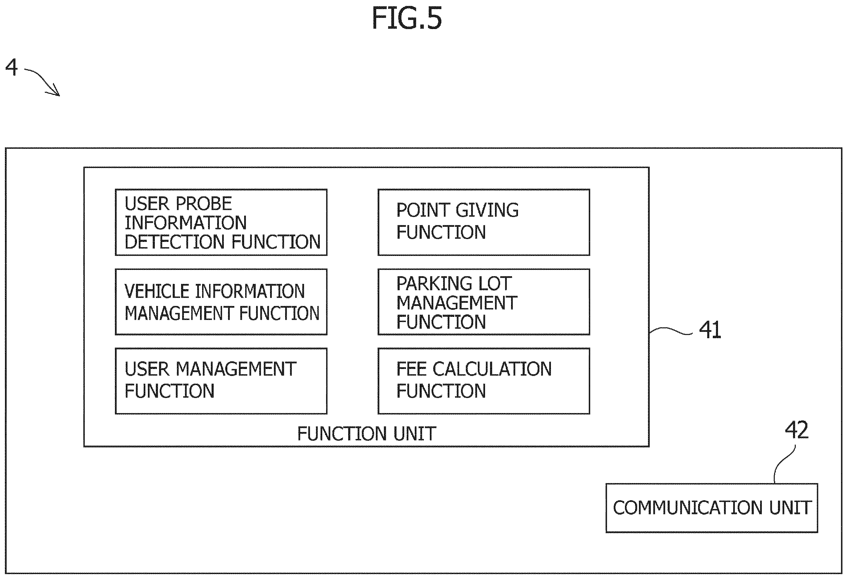

As shown in Figure 5, the management function server 4 includes a function unit 41 and a communication unit 42. The function unit 41 includes: a function to detect user probe information; a function to manage vehicle information; a function to manage a user; a function to give points; a function to manage the parking lot; and a function to calculate a parking fee. The communication unit 42 communicates with the road-shoulder communication device 1 and the POS terminal 5.

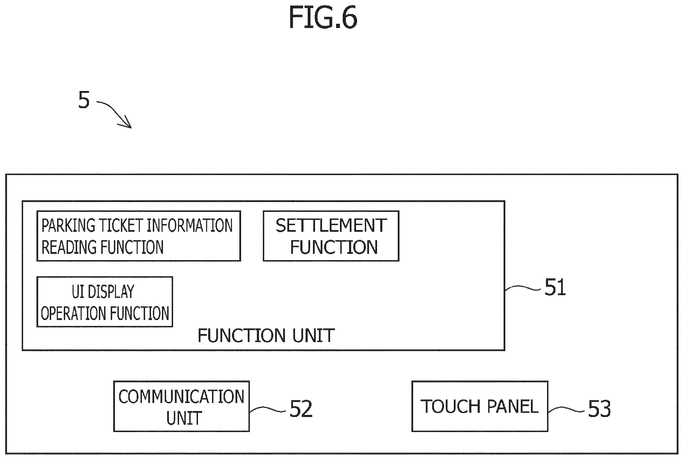

As shown in Figure 6, the POS terminal 5 includes a function unit 51, a communication unit 52, and a touch panel 53. The function unit 51 includes: a function to read information about a parking ticket; a function to display a user interface (UI) and accept a user's operation; and a settlement function. The communication unit 52 communicates with the management function server 4 and the mobile terminal 3. The user interface is displayed on the touch panel 53.

Each of the road-shoulder communication device 1, the on-board device 2a, the mobile terminal 3, the management function server 4, and the POS terminal 5 includes an arithmetic processing unit, a storage device, and an interface for external communication as computer hardware.

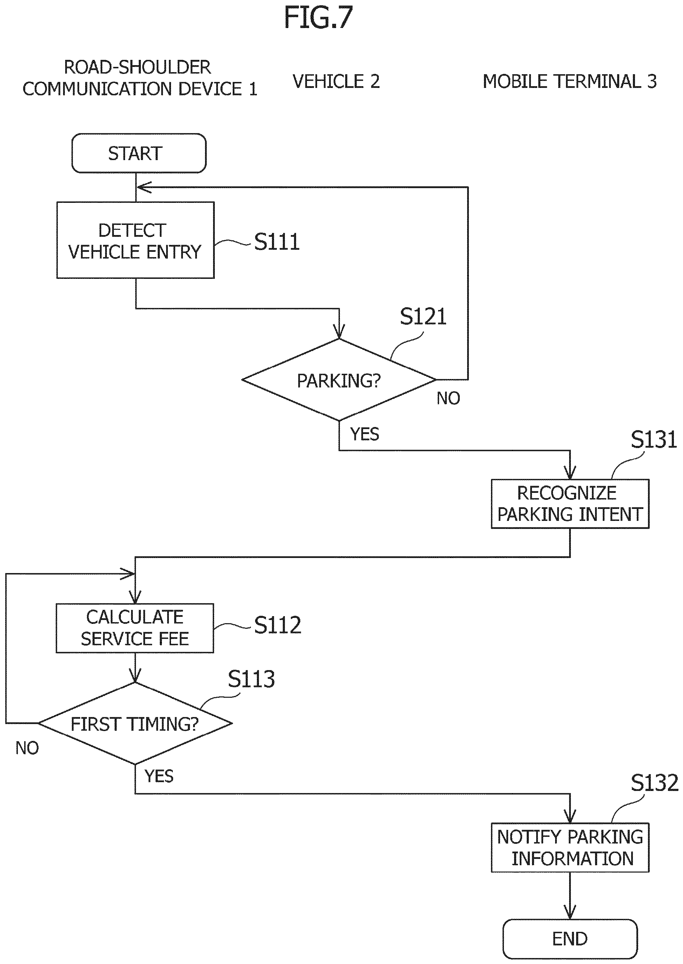

Figure 7 shows a flow of the first processing performed in the parking information service system S.

In step S111, the vehicle approach detection unit 12 of the road-shoulder communication device 1 detects that the vehicle 2 has entered a predetermined area. Subsequently, step S121 is performed.

The predetermined area is preset in the management function server 4, and is notified in advance from the management function server 4 to the road-shoulder communication device 1. The communication unit 11 in the road-shoulder communication device 1 transmits information about the predetermined area all the time. When the communication unit 23 in the on-board device 2a receives information about the predetermined area, and the controller 21 in the on-board device 2a determines that the position of the vehicle 2 is inside the predetermined area, the communication unit 23 in the on-board device 2a returns the determination result to the road-shoulder communication device 1. In this way, step S111 is performed.

Alternatively, step Sill may be performed through analysis of a video image of the camera 13 in which the predetermined area is captured, the analysis being performed by the controller 14 in the road-shoulder communication device 1.

In step S121, the road-shoulder communication device 1 sends a confirmation message of a parking intent to the on-board device 2a. Although the on-board device 2a mediates this confirmation message to the mobile terminal 3 linked to the on-board device 2a, this message is displayed not on the mobile terminal 3, but on the touch panel 22 of the on-board device 2a. The touch panel 22 of the on-board device 2a is larger than the touch panel 32 of the mobile terminal 3, and thus, change of line of sight of the driver to the on-board device 2a of the touch panel 22 is less than change of the line of sight of the driver to the touch panel 32 of the mobile terminal 3, which can contribute to safety considerations.

In the same step, if an input indicating a parking intent is input to the on-board device 2a, step S131 is performed, and otherwise, step Sill is performed again.

In step S131, the terminal 3 recognizes that the driver has a parking intent through the communication with the on-board device 2a. Subsequently, step S112 is performed.

In step S112, the terminal 3 notifies the road-shoulder communication device 1 that the driver has a parking intent. This notification includes the following information:
(1) user ID: to identify a user (driver);
(2) passenger ID: to deduct a parking fee etc., in combination of a passenger's purchase/visit points with user's purchase/visit points;
(3) vehicle ID: to calculate a parking fee in consideration of user's purchase/visit points; and
(4) MAC address of the mobile terminal 3: as an identifier for detecting shop visit information on the shop side.

Furthermore, at the timing when the vehicle 2 is stopped and the shift position is put into a parking position, the on-board device 2a notifies the road-shoulder communication device 1 that the vehicle 2 is in a parked state. The controller 14 of the road-shoulder communication device 1 saves the time when this notification is received as a parking start time.

The road-shoulder communication device 1 periodically calculates the parking fee of the vehicle 2 having been parked in accordance with a period of time from the above parking start time to the current time. At this time, the parking fee can be calculated in consideration of discounts due to shopping at the facility by the driver and the passengers of the vehicle 2.

Each shop in the above facility is equipped with a wireless communication device such as Wi-Fi. Generally, the wireless communication device transmits a unique ID (MAC address) of a terminal as a probe request. When the wireless communication device of each shop receives the MAC address received in step S112 as a probe request, the device adds a point to the account of the user as a shop visit point.

When the user desires to make a purchase, a settlement is made by using a settlement function of the mobile terminal 3 or another smartphone settlement function that can be linked, and this payment is associated with the user ID so as to cause the POS terminal and the management function server to recognize this. If another payment method is selected, that is, in the case in which the payment is made by a credit card or cash, a parking ticket is displayed on a display unit of the mobile terminal 3, and the POS terminal 5 reads the parking ticket; or the user ID is transmitted from the mobile terminal 3 to the POS terminal 5 in cooperation with the communication device provided to the POS terminal 5, to thereby associate the purchase information with the user.

In step S113 following step S112, the road-shoulder communication device 1 determines whether or not the current time is the first timing. If it is determined that the current time is the first timing, step S132 is performed, and otherwise, step S112 is performed again.

In step S132, the controller 31 in the mobile terminal 3 displays the parking information (parking fee) on the touch panel 32 of the mobile terminal 3.

It can be considered that the "first timing" in step S113 is a timing when the mobile terminal 3 moves from the inside of the predetermined area to the outside the predetermined area.

If the parking intent of the vehicle 2 is input into the controller 21 by the occupant of the vehicle 2 via the touch panel 22, the terminal 3 receives information about the predetermined area from the road-shoulder communication device 1 or the management function server 4. The terminal 3 has a position identifying function such as a GPS function, and the terminal 3 can determine whether the self-position is inside the predetermined area or outside the predetermined area. The "first timing" is identified by this determination.

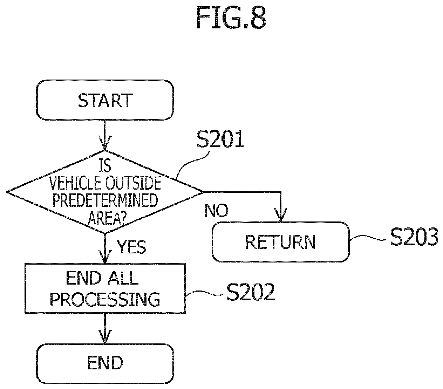

Figure 8 shows a flow of the second processing performed in the parking information service system S. This processing is continuously performed until the vehicle 2 leaves the parking lot after it is determined in step S121 that the vehicle 2 is parked.

In step S201, it is determined whether or not the vehicle is located outside the predetermined area (whether or not the vehicle is out of the predetermined area). If it is determined that the vehicle is located outside the predetermined area, step S202 is subsequently performed, otherwise step S203 is performed.

In step S202, all processing is ended. That is, the vehicle has left the facility, and thus, all the controls on the on-board device and the mobile terminal are ended. In addition, the road-shoulder communication device also ends control of fee calculation on the vehicle, the terminal, and other devices.

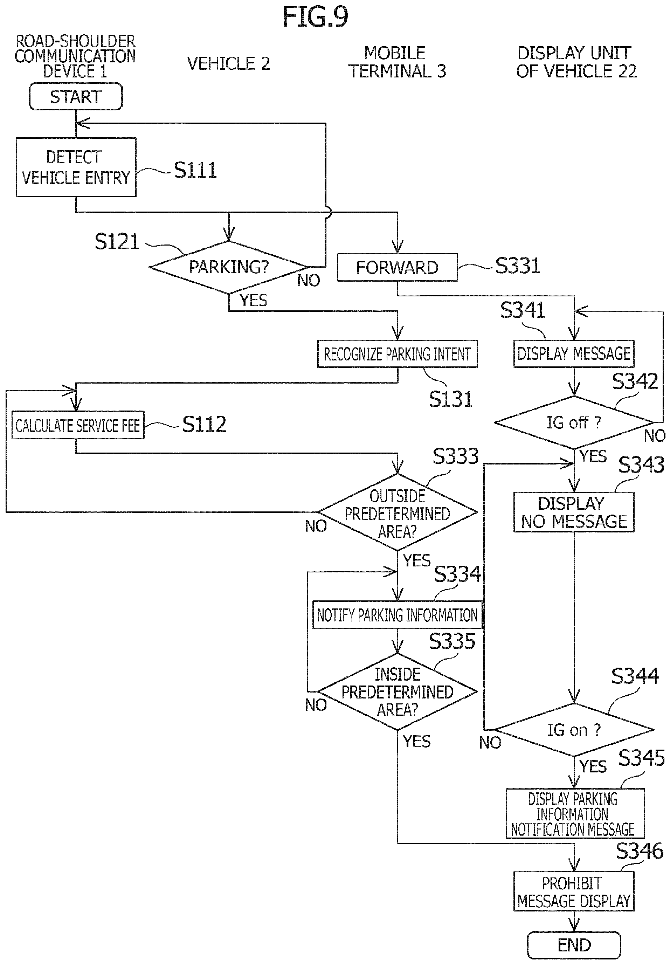

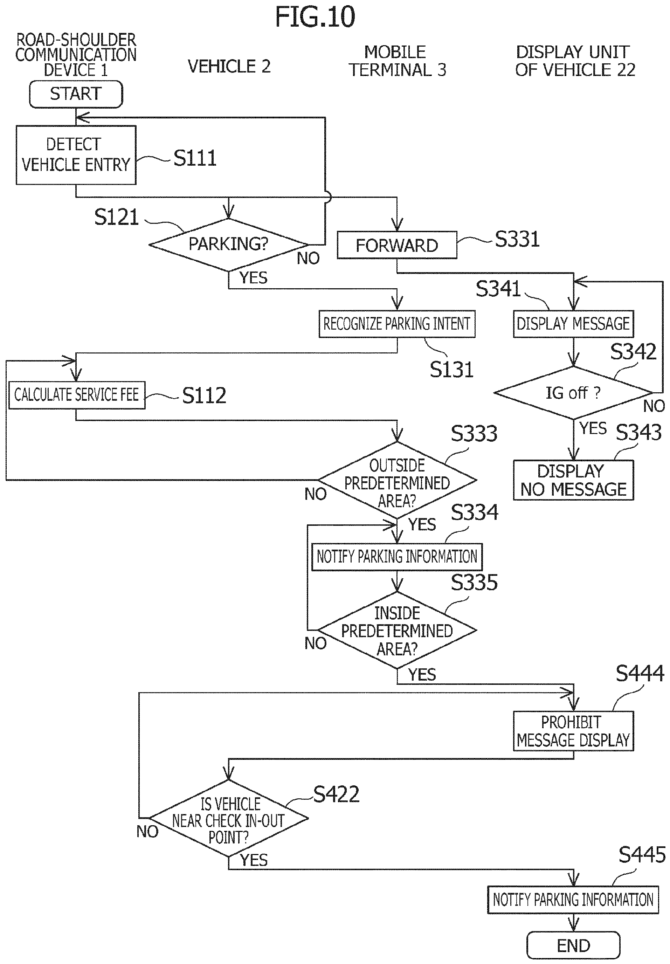

In step S203, determining that the vehicle is inside the predetermined area, the return processing is performed. That is, the return processing of returning to any step in Figure 7 (step in accordance with a current situation) is performed. Alternatively, the return processing to any step in Figure 9 and Figure 10, described later, is performed.

Figure 9 shows a flow of the third processing performed in the parking information service system S. The same steps as those in Figure 7 are designated by the same reference numerals, and detailed description thereof will be omitted.

After step S111 is performed, steps S121 and S331 are performed.

After step S121 is performed, step S131 or step S111 is performed.

After step S131 is performed, step S112 is performed.

After step S112 is performed, step S333 is performed.

In step S333, the controller 31 of the terminal 3 determines whether or not the position of the terminal 3 is outside the predetermined area. If it is determined that the position of the terminal 3 is outside the predetermined area, step S334 is subsequently performed, otherwise step S112 is performed again.

In step S334, the terminal 3 causes the touch panel 32 to display the parking information. Subsequently, step S335 is performed.

In step S335, the controller 31 of the terminal 3 determines whether or not the position of the terminal 3 is inside the predetermined area. If it is determined that the position of the terminal 3 is inside the predetermined area, step S346 is subsequently performed, otherwise step S334 is performed again.

In step S346, the message display on the touch panel 22 of the on-board device 2a is prohibited.

In step S331 following step Sill, from the road-shoulder communication device 1, the mobile terminal 3 receives a notification that vehicle approach has been detected, and forwards the notification to the on-board device 2a. Subsequently, step S341 is performed.

In step S341, messages are displayed on the touch panel 22 of the on-board device 2a. The messages include a parking intent confirmation message and a message regarding agreements of the parking lot and the fee setting.

In step S342, the controller 21 of the on-board device 2a determines whether or not the drive device of the vehicle 2 is in an off state (ignition-OFF). If it is determined that the drive device of the vehicle 2 is in the off state, step S343 is performed, otherwise step S341 is performed again.

In step S343, the touch panel 22 of the on-board device 2a stops displaying the message.

In step S344, the controller 21 of the on-board device 2a determines whether or not the drive device of the vehicle 2 is in an on state (ignition-ON). If it is determined that the drive device of the vehicle 2 is in the on state, step S345 is performed, otherwise step S343 is performed again.

In step S345, the touch panel 22 of the on-board device 2a displays a parking information notification message.

Figure 10 shows a flow of the fourth processing performed in the parking information service system S. The same steps as those in Figure 7 and Figure 9 are designated by the same reference numerals, and detailed description thereof will be omitted.

In this fourth processing, after step S343 is performed, the fourth processing is ended.

Furthermore, in this fourth processing, step S444 is performed following step S335.

In step S444, the message display on the touch panel 22 of the on-board device 2a is prohibited. Subsequently, step S422 is performed.

In step S422, the controller 21 of the on-board device 2a determines whether or not the position of the vehicle 2 is near a check in-out point of the parking lot. If it is determined that the position of the vehicle 2 is near the check in-out point of the parking lot, step S445 is performed, and otherwise, step S444 is performed again.

In step S445, the touch panel 22 of the on-board device 2a displays the parking information notification message.

Flowcharts are shown in Figure 7 to Figure 10.

Figure 7 shows a flow (mobile phone start condition) of notifying the parking information when the parking determination is made and the first timing is satisfied.

Figure 8 is a flow (end condition of all controls) of ending the processing when the vehicle having been parked moves out of the predetermined area, that is, the parking lot.

Figure 9 is a flow (start condition and end condition of the mobile phone) of determining the parking, notifying the user who is outside the predetermined area of the parking information, and stopping the message display to the user who is returned to the predetermined area. In addition, Figure 9 shows a flow (start condition of the vehicle display) of displaying a message on the touch panel of the on-board device 2a until the vehicle is put into ignition-OFF after the parking, and displaying the parking information on the touch panel of the on-board device 2a when the vehicle is put into ignition-ON again.

Figure 10 is a flow (start condition, end condition of the mobile phone) for determining the parking, providing a notification of the parking information for the user who is outside the predetermined area, and stopping display of the message to the user who has returned to the predetermined area. Furthermore, Figure 10 shows a flow (start condition of display to the vehicle) of displaying the message on the touch panel of the on-board device 2a after the parking and before the vehicle is put into ignition-OFF, and displaying the parking information when the vehicle is put into ignition-ON again. In addition, Figure 10 also shows a flow (start condition of display to the vehicle) of notifying the parking information when the vehicle is about to leave the parking lot approaches the check in-out point.

That is, there are following three patterns.
- Pattern in Figure 7
- Pattern in Figure 9 (the flow more detailed than that in Figure 7. The parking information notification message is displayed due to the ignition-ON again)
- Pattern in Figure 10 (the parking information is notified near the check in-out point)

It should be noted that the flow in Figure 8 corresponds to all end conditions for assuming the case in which the vehicle moves out of the above facility at which the parking lot is located.

According to the embodiment shown in Figure 7, the service fee (the parking fee and the fee regarding service and or purchase at shops at which the parking lot is located) can be notified to the driver at an appropriate timing (the first timing).

In the case in which an application device is a mobile phone, for example, notification to the driver during traveling of the vehicle is dangerous for the driver. Based on this, in the above embodiment, the driver can continue to check the service fee that changes sequentially after the driver parks the vehicle.

The predetermined area is set by a road-shoulder communication unit, and may be set as a site of the parking lot, for example.

The first timing may be set as a timing when the occupant moves out of the predetermined area from the inside thereof. Alternatively, the first timing may be set as a timing when the shift position of the vehicle 2 is set to a parking position, a timing of ignition-OFF, or a timing when a predetermined period of time is elapsed from the ignition-OFF.

The determination of the first timing may be made on the terminal side or on the road-shoulder communication device side.

The occupant can check the fee since the occupant moved out of the predetermined area (the parking lot). However, this is excluded when the occupant moves out of the predetermined area with the vehicle.

The driver can check when necessary, and cannot check when unnecessary after getting out of the vehicle in the parking lot; therefore, it is possible to prevent other users from being hindered by checking the fee within the parking lot regarding the destination.

By providing the notification on the touch panel, such as a car navigation, of the on-board device at the timing of re-ignition-ON when the vehicle is parked and is then re-started, the display can be provided only when necessary, to thereby avoid trouble if the display is provided before the ignition-OFF is set.

It can be considered that the fee is displayed either automatically or by selection by the driver, e.g., by pressing a display button; and the fee can be confirmed immediately without checking the mobile phone in an IGon state before the start-up of the engine.

The settlement can be made in advance.

Since the fee is automatically displayed when near the check in-out point, it is possible to confirm the fee and confirm that the vehicle is near the check in-out point. The display is provided not on the mobile phone, but on the touch panel, such as a car navigation system, of the on-board device; thus, the fee can be checked relatively safely.

It is possible to check the information about the parking lot and the shop while staying in the parking lot.

Since the display is provided on the touch panel of the on-board device, the fee can be checked relatively safely even during driving.

When the occupant moves out of and re-enters the predetermined area, it is configured not to display the service agreements, advertisements, and information about the parking location as being unnecessary; thus, it is possible to avoid trouble if unnecessary information is displayed on the way back.

As far as staying inside the predetermined area, the display can be provided even from the ignition-OFF state to the ignition-ON state; therefore, it is also possible to check the information when reconfirmation is desired in the ignition-OFF state.

When the vehicle moves out of and re-enters the parking lot, it is necessary to display the message. Therefore, when the vehicle moves out of and re-enters the area, the display can be provided.

According to the embodiment shown in Figure 7 to Figure 10, the following effects can be obtained.
- Communication via the road-shoulder communication device 1 can reduce the amount of communication data via the Internet network.
- When the management function server 4 is located in the in-shop network of the above facility, the on-board device 2a and the mobile terminal 3 can communicate with the management function server 4 without cellular line; thus, the communication cost via Internet Network can be reduced for both the facility and the user. Note that, in this case, the mobile terminal 3 and the on-board device 2a connect to the in-shop network via wireless communication of the road-shoulder communication device 1 or of Wi-Fi, Bluetooth or the like of the shop to communicate with the management function server 4.

In addition, the following effects can be obtained by the timing of notification of the parking information (parking fee).
- Since the parking-stopping state of the vehicle is determined based on the vehicle information, the fee calculation can be started not from the timing of entering the parking lot, but from the timing of the start of parking.
- The period of vehicle moving time within the parking lot can be excluded from the fee calculation target. In the case of a large parking lot, it is possible to calculate the parking fee based on the net parking time, considering that it takes a relatively long time to move the vehicle within the parking lot.
- It is possible to keep the processing on the mobile terminal to the minimum necessary when the vehicle stops or moves out of the predetermined area, for example. This also leads to reduction in power consumption in the mobile terminal.

The calculation unit for calculating the parking fee may be the controller 14 of the road-shoulder communication device 1 or the function unit 41 of the management function server 4.

The following Appendixes are disclosed with respect to the embodiments described so far.

### Appendix 1

A parking information service system including:
a receiving unit receiving information about a parking start time of a vehicle in a predetermined area;
a calculation unit calculating a parking fee of the vehicle; and
a transmitting unit transmitting information about the parking fee to a terminal of a user of the vehicle, wherein
the information about the parking fee is displayed on a display unit of the terminal at a first timing (steps S113 and S132 in Figure 7, steps S333 and S334 in Figure 9 and Figure 10).

### Appendix 2

The parking information service system according to Appendix 1, wherein the first timing is a timing when the terminal of the user is moved from an inside of the predetermined area to an outside of the predetermined area (steps S131, S112, and S333 in Figure 9 and Figure 10).

### Appendix 3

The parking information service system according to Appendix 1 or 2, wherein
the information about the parking fee is further displayed on the display unit of the terminal at a second timing, and
the second timing is a timing when the vehicle is put into ignition-ON after the parking start time of the vehicle (steps S342 and S343 in Figure 9 and Figure 10).

### Appendix 4

The parking information service system according to Appendix 1 or 2, wherein
the information about the parking fee is further displayed on the display unit of the terminal at a third timing, and
the third timing is a timing when the vehicle enters an inside of the predetermined area from a check in-out point of the parking fee after the parking start time of the vehicle (steps S422 and S445 in Figure 10).

### Appendix 5

The parking information service system according to any one of Appendixes 1 to 4, wherein when the vehicle is parked in the predetermined area, a message about at least one of parking service agreements, advertisements, and a parking location in the predetermined area is displayed on a display device of the vehicle (step S341 in Figure 9 and Figure 10).

### Appendix 6

The parking information service system according to Appendix 5, wherein after the user moves from the inside of the predetermined area to the outside of the predetermined area, no message is displayed when the user moves from the outside of the predetermined area to the inside of the predetermined area (steps S333, S335, and S346 in Figure 9, steps S333, S335, and S444 in Figure 10).

Although embodiments of the present invention have been described above, the present invention is not limited to the above-described embodiments, and various modifications and changes can be made based on the technical concept of the present invention.

### [Reference Signs List]

S parking information service system
1 road-shoulder communication device
11 communication unit
12 vehicle approach detection unit
13 camera
14 controller
2 vehicle
2a on-board device
21 controller
22 touch panel
23 communication unit
3 mobile terminal
31 controller
32 touch panel
33 communication unit
4 management function server
41 function unit
42 communication unit
5 POS terminal
51 function unit
52 communication unit
53 touch panel

## Claims

1. A parking information service system comprising:
a receiving unit receiving information about a parking start time of a vehicle in a predetermined area;
a calculation unit calculating a parking fee of the vehicle; and
a transmitting unit transmitting information about the parking fee to a terminal of a user of the vehicle, wherein
the information about the parking fee is displayed on a display unit of the terminal at a first timing.

2. The parking information service system according to claim 1, wherein the first timing is a timing when the terminal of the user is moved from an inside of the predetermined area to an outside of the predetermined area.

3. The parking information service system according to claim 1 or 2, wherein
the information about the parking fee is further displayed on the display unit of the terminal at a second timing, and
the second timing is a timing when the vehicle is put into ignition-ON after the parking start time of the vehicle.

4. The parking information service system according to claim 1 or 2, wherein
the information about the parking fee is further displayed on the display unit of the terminal at a third timing, and
the third timing is a timing when the vehicle enters an inside of the predetermined area from a check in-out point of the parking fee after the parking start time of the vehicle.

5. The parking information service system according to any one of claims 1 to 4, wherein when the vehicle is parked in the predetermined area, a message about at least one of parking service agreements, advertisements, and a parking location in the predetermined area is displayed on a display device of the vehicle.

6. The parking information service system according to claim 5, wherein after the user moves from the inside of the predetermined area to the outside of the predetermined area, no message is displayed when the user moves from the outside of the predetermined area to the inside of the predetermined area.
